(19) Europäisches Patentamt
European Patent Office
Office européen des brevets

(11) **EP 3 224 590 B1**

(12) **EUROPÄISCHE PATENTSCHRIFT**

(45) Veröffentlichungstag und Bekanntmachung des Hinweises auf die Patenterteilung:
**05.12.2018   Patentblatt 2018/49**

(51) Int Cl.:
***G01L 3/04*** *(2006.01)*          ***G01M 17/10*** *(2006.01)*
***G01M 7/02*** *(2006.01)*

(21) Anmeldenummer: **15813305.8**

(22) Anmeldetag: **10.12.2015**

(86) Internationale Anmeldenummer:
**PCT/EP2015/079239**

(87) Internationale Veröffentlichungsnummer:
**WO 2016/119964 (04.08.2016 Gazette 2016/31)**

(54) **VERFAHREN ZUR BESTIMMUNG EINES TORSIONSMOMENTES**

METHOD FOR DETERMINING A TORSIONAL MOMENT

PROCÉDÉ DE DÉTERMINATION D'UN COUPLE DE TORSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2015   DE 102015201673**

(43) Veröffentlichungstag der Anmeldung:
**04.10.2017   Patentblatt 2017/40**

(73) Patentinhaber: **Siemens Mobility GmbH**
**81739 München (DE)**

(72) Erfinder:
• **BREUER, Werner**
  **80469 München (DE)**

• **YU, Minyi**
  **82216 Maisach (DE)**

(56) Entgegenhaltungen:
**DE-B3-102012 206 606**

• **Franz-Josef ET AL: "Answers for infrastructure and cities. Frei verwendbar Siemens AG 2014 Alle Rechte vorbehalten. Auf der Suche nach dem maximalen Radsatzwellen Torsionsmoment", , 10. September 2014 (2014-09-10), XP055254493, Gefunden im Internet: URL:http://www.schienenfahrzeugtagung.at/download/PDF2014/DiV07-Weber.pdf [gefunden am 2016-03-02]**

EP 3 224 590 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Bestimmung eines Torsionsmomentes gemäß Patentanspruch 1.

Im Stand der Technik ist es bekannt, das Torsionsmoment, das auf eine Radsatzwelle eines Schienenfahrzeuges einwirkt, während eines Testbetriebes zu messen. Diese Vorgehensweise ist jedoch sehr zeitaufwändig. Weiterhin ist es bekannt, das Torsionsmoment, das auf eine Radsatzwelle eines Schienenfahrzeuges einwirkt, mit einer Vogel-Gerade zu ermitteln wenn die Gleitgeschwindigkeit relativ klein ist. Mithilfe der Vogel-Geraden wird das Torsionsmoment in Abhängigkeit von der Steifigkeit der Welle, der Gleitgeschwindigkeit, dem Radius des Rades und der Ratterfrequenz berechnet.

Aus WEBER, Franz-Josef: Auf der Suche nach dem maximalen Radsatzwellen-Torsionsmoment, in ZEVrail, Bd. 138, 2014, Sonderheft Tagungsband "42. Tagung Moderne Schienenfahrzeuge der Technischen Universität Graz, 7. bis 10. September 2014", S 176-180 (ISSN 1618-8330) wird unter Kapitel 5 mit der Überschrift "Das maximale Torsionsmoment" ausgeführt, dass die beim Betrieb im abfallenden Ast der Kraftschlusskennlinie aufklingende selbsterregte Schwingung des Radsatzes nicht unbegrenzt aufklingt, vielmehr stellt sich eine stabile Grenzfrequenz ein. Deren maximale Amplitude ist begrenzt durch die Energiebilanz während der Grenzfrequenz, in die zum einen die nichtlineare Kraftschluss/Schlupf-Kennlinie eingeht, und auf die zum anderen die Dämpfung im Antriebsstrang wirkt, die durch Verlust dem Getriebe- und Achslagern erzeugt wird. In einer stark vereinfachenden Näherung ist das maximale Torsionsmoment durch die Gleitgeschwindigkeit am Arbeitspunkt begrenzt.

Aus WEBER, Franz-Josef: Auf der Suche nach dem maximalen Radsatzwellen-Torsionsmoment, Präsentation anlässlich "42. Tagung Moderne Schienenfahrzeuge der Technischen Universität Graz, 7. bis 10. September 2014", wird die Torsionsschwingung des Radsatzes anhand des Kraftschlussgesetzes dargestellt. Eine Dämpfung der Torsionsschwingung erfolgt durch die negative Steigung der Kraftschlusscharakteristik im Makroschlupfbereich. Der Grad der Dämpfung hängt von der Steilheit der negativen Steigung der Kraftschlusscharakteristik im Schlupfarbeitspunkt ab. Bei ausreichender Dämpfung wird die Torsionsschwingung instabil. Im Kraftschlussdiagram stellt sich ein Grenzzykel ein. Die Maximalamplitude des Grenzzykels bestimmt sich aus der Energiebilanz über einem Grenzzykel.

Aus EP 2 913 241 A1 ist ein Verfahren zum Entwerfen einer Antriebseinheit für ein Schienenfahrzeug bekannt. Für einen mechanischen Konstruktionsschritt wird zumindest ein Belastungswert abhängig von realen Haftungseigenschaften des Radträgers definiert, wobei die Haftungseigenschaften einen Schlupf des Rades auf der Schiene berücksichtigen, und wobei Betriebsdaten eines Referenzschienenfahrzeuges berücksichtigt werden.

Aus EP 2 913 202 A1 ist ein weiteres Verfahren zum Entwerfen einer Antriebseinheit mit einem Antrieb und einem Radträger bekannt, abhängig von auftretenden Belastungen eine formschlüssige Verbindung zwischen einem Rad und einer Radachse ermittelt wird.

Aus DE 10 2012 206 606 B3 ist ein Verfahren zum Untersuchen von Torsionsschwingungen an Radsätzen von Schienenfahrzeugen bekannt. Dabei wird ein Radsatz mit einer Radsatzwelle und zwei Rädern betrachtet, wobei die zwei Räder auf zwei Fahrschienen laufen. Zudem ist ein erstes Tragelement zum Tragen des ersten Rades und ein zweites Tragelement zum Tragen des zweiten Rades vorgesehen. Weiterhin ist eine Basis vorgesehen, die das erste Tragelement und das zweite Tragelement abstützen. Zudem ist eine Lagerung vorgesehen, mittels der das erste Tragelement in einer Längsrichtung, die der Fahrtrichtung der auf die Tragelemente gestellten Radsätze entspricht, beweglich gelagert ist. Weiterhin ist eine Antriebsvorrichtung vorgesehen, die mit dem ersten Tragelement kombiniert ist und ausgestaltet ist, um eine Bewegung des ersten Tragelementes in der Längsrichtung anzutreiben und dadurch eine mechanische Schwingung des ersten Tragelementes in der Längsrichtung anzuregen. Weiterhin ist das erste Tragelement über eine elastische Ankoppelung mit der Basis verbunden, sodass die elastische Ankoppelung bei Auslenkung des ersten Tragelements in der Längsrichtung zu einer Ruhelage eine Rückstellkraft bewirkt, die zu der mechanischen Stimmung führt.

Franz-Josef et al: "Answers for infrastructure and cities...auf der Suche nach dem maximalen Radsatzwellen Torsionsmoment", 10. September 2014 (2014-09-10), XP055254493, gefunden im Internet : URL:http://www.schienenfahrzeugtagung.at/download/pdf2014/DiV07-Weber.pdf beschreibt den Kraftschlussverlauf in Abhängigkeit vom Schlupf für ein Schleudern des Radsatzes mit Angabe von physikalischen Bewegungsgleichungen., Weiterhin wird der Kraftschluss für ein Rattern in Radsatzwellen in Abhängigkeit vom Radschlupf beschrieben. Zudem wird die Torsionsschwingung im Kraftschlussgesetz als Kraftschluss in Abhängigkeit vom Schlupf anhand eines Diagramms dargestellt. Weiterhin werden gemessene dynamische Torsionsmomente bei Variation des Gleitgeschwindigkeitsarbeitspunkts dargestellt.

Die Aufgabe der Erfindung besteht darin, das Verfahren zur Bestimmung eines Torsionsmomentes einer Radsatzwelle eines Schienenfahrzeuges zu verbessern.

Die Aufgabe der Erfindung wird durch das Verfahren gemäß Anspruch 1 gelöst.

Weitere Ausführungsformen des Verfahrens sind in den abhängigen Ansprüchen angegeben.

Ein Vorteil des beschriebenen Verfahrens besteht darin, dass das Torsionsmoment, das auf eine Radsatzwelle einwirkt, genauer als unter Verwendung der Vogel-Gerade ermittelt werden kann. Dabei wird ein Modell für eine Torsionsschwingung der Radsatzwelle und eine Dämpfungsenergie an einem vorgegebenen Schlupfarbeitspunkt verwendet.

Mithilfe des Modells werden die Energie der Torsionsschwingung und die Dämpfungsenergie berechnet, die auf die Torsionsschwingung der Radsatzwelle an dem Schlupfarbeitspunkt einwirkt. Abhängig von der Energie der Torsionsschwingung und der Dämpfungsenergie wird das auf die Radsatzwelle wirkende Torsionsmoment ermittelt. Somit kann auf aufwändige Testfahrten verzichtet werden. Zudem wird das Torsionsmoment präziser im Vergleich zur Vogel-Gerade ermittelt.

In einer Ausführungsform wird ein erstes Modell für die Energie der Torsionsschwingung der Radsatzwelle um den Schlupfarbeitspunkt verwendet. Zudem wird ein zweites Modell für die Dämpfungsenergie verwendet, wobei beide Modelle von einer Amplitude des Schwingwinkels der Torsionsschwingung der Radsatzwelle abhängen. Mithilfe eines numerischen Berechnungsverfahrens wird stufenweise die Amplitude bei beiden Modellen solange erhöht, bis die Werte für die Energie an einem Kreuzungspunkt der Modelle gleich groß sind. Anhand der Amplitude des Schwingwinkels wird unter Berücksichtigung der Torsions-steifigkeit der Radsatzwelle ein Torsionsmoment ermittelt. Mit diesem Verfahren kann insbesondere ein maximales Torsionsmoment ermittelt werden.

Die Bestimmung des Torsionsmomentes wird für eine positive und/oder eine negative Beschleunigung des Schienenfahrzeuges durchgeführt. Somit können sowohl für eine Beschleunigung des Schienenfahrzeuges als auch für eine Bremsung des Schienenfahrzeuges ein Torsionsmoment, insbesondere ein maximales Torsionsmoment ermittelt werden.

In einer weiteren Ausführung wird ein Modell für die Energie der Torsionsschwingung in wenigstens drei Bereiche unterteilt. Die drei Bereiche unterscheiden sich durch unterschiedliches Verhalten des Reibwertes, der zwischen dem Rad und der Schiene auftritt. Die Reibwerte werden insbesondere abhängig vom Schlupf der Räder beschrieben. Durch die Unterteilung des Modells in drei Bereiche kann eine genauere Ermittlung des Torsionsmomentes erreicht werden.

In einer weiteren Ausführungsform wird für jeden der wenigstens drei Bereiche des Modells die Energie der Torsionsschwingung während einer Torsionsschwingung um den Schlupfarbeitspunkt berechnet. Die drei Energieanteile werden zu einer Energie der Torsionsschwingung addiert. Auf diese Weise wird die Energie während einer Torsionsschwingung um den Schlupfarbeitspunkt genauer beschrieben.

In einer weiteren Ausführungsform wird die Energie der Torsionsschwingung abhängig von einem vorgegebenen Fahrgeschwindigkeitsbereich des Schienenfahrzeuges berechnet. Dabei kann insbesondere eine maximale Energie der Torsionsschwingung für die Ermittlung eines maximalen Torsionsdrehmomentes der Radsatzwelle berechnet werden. Somit wird eine weitere Verbesserung des Berechnungsverfahrens erreicht.

In einer weiteren Ausführung wird die Energie der Torsionsschwingung abhängig von einem vorgegebenen Winkelgeschwindigkeitsbereich berechnet. Dabei wird insbesondere eine maximale Energie der Torsionsschwingung für die Ermittlung eines maximalen Torsionsdrehmomentes der Radsatzwelle berechnet. Somit wird eine weitere Verbesserung der Ermittlung des maximalen Torsionsdrehmomentes bereitgestellt.

Eine einfache Ausführung des Verfahrens wird dadurch ermöglicht, dass die Torsionsschwingung mithilfe einer Sinusschwingung oder einer Cosinusschwingung dargestellt wird. Auf diese Weise kann die Schwingungsenergie einfach berechnet werden.

In einer weiteren Ausführungsform wird ein Schlupf eines Rades während einer Torsionsschwingung abhängig von einer Winkelgeschwindigkeit der Torsionsschwingung beschrieben. Dadurch wird eine weitere Vereinfachung des Berechnungsverfahrens erreicht.

In einer weiteren Ausführungsform wird das berechnete Torsionsmoment dazu verwendet, um eine Welle und/oder eine Verbindungsstruktur zwischen der Welle und dem Rad so zu dimensionieren, dass die Radsatzwelle das berechnete Torsionsmoment ohne Beschädigung erträgt.

In einer weiteren Ausführung wird das ermittelte Torsionsmoment dazu verwendet, um eine Radsatzwelle in Bezug auf die Dicke der Welle und/oder einen Festigkeitsparameter der Verbindungsstruktur dahingehend zu überprüfen, ob die Radsatzwelle das ermittelte Torsionsdrehmoment ohne Beschädigung erträgt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen

FIG 1    eine schematische Darstellung eines Modells für einen Einmassenschwinger,

FIG 2    eine schematische Darstellung eines Diagramms für einen Reibwert in Abhängigkeit vom Schlupf bzw. der Raddrehgeschwindigkeit,

FIG 3    ein Diagramm mit einer schematischen Darstellung einer Torsionsschwingung um einen Schlupfarbeitspunkt,

FIG 4    ein Diagramm mit einer schematischen Darstellung eines Zeitverlaufes eines Schwingwinkels und einer Schwingwinkelgeschwindigkeit während einer Torsionsschwingung einer Radsatzwelle um den Schlupfarbeitspunkt,

FIG 5    eine schematische Darstellung eines Verlaufs einer Schwingungsenergie und einer Absorptionsenergie gemäß einer numerischen Berechnung, und

FIG 6    eine schematische Darstellung eines Programmablaufes zur Durchführung des Verfahrens, und

FIG 7    eine Vorrichtung zur Durchführung des Verfahrens.

Bei einem Auslegungsprozess zur Dimensionierung von Radsatzwellen oder bei einem Überprüfungsverfahren zum Überprüfen von Radsatzwellen ist es wichtig, eine Größenordnung möglicher durch Antriebsstrangschwingungen verursachter dynamischer Wellentorsionsmomente, d.h. Torsionsmomente, die auf eine Radsatzwelle eines Schienenfahrzeuges einwirken, realistisch abschätzen zu können. Bei Schienenfahrzeugen kann es beim Antrieb, d.h. bei der Beschleunigung oder beim Abbremsen unter ungünstigen Kraftschlussbedingungen zwischen Rädern der Radsatzwelle und Schienen, auf denen die Räder fahren, zu selbsterregten Torsionsschwingungen in der Radsatzwelle kommen. Dabei handelt es sich um eine Schwingungsform, bei der die beiden Räder in der Torsionseigenfrequenz des Antriebsstranges gegenphasig zueinander schwingen. Aufgrund der geringen Dämpfung in der Radsatzwelle können dabei hohe Torsionsmomente auftreten.

Diese Schwingung wird auch als Ratter- bzw. Rollierschwingung bezeichnet. Entdämpft wird die Torsionsschwingung durch die negative Steigung der Kraftschlusscharakteristik im Makroschlupfbereich zwischen dem Rad und der Schiene. Der Grad der Dämpfung hängt von der Steilheit der negativen Steigung der Kraftschlusscharakteristik im Schlupfarbeitspunkt ab. Bei einer ausreichenden Entdämpfung wird die Torsionsschwingung instabil. Im Kraftschlussdiagramm stellt sich ein Grenzzykel ein. Neben der Dämpfungsenergie wird eine Maximalamplitude wird für kleine Schlüpfe durch einen stabilen Ast der Kraftschlusscharakteristik und für große Schlüpfe zusätzlich oder allein durch eine flacher werdende Kraftschlusscharakteristik begrenzt. Die Maximalamplitude der Torsionsschwingung des Grenzzykels bestimmt sich aus einer Energiebilanz über den Grenzzykel.

Aus der kinematischen Beziehung zwischen der Schlupfamplitude und der gegenphasigen Schwingung der Räder wird die analytische Beschreibung des dynamischen Torsionsmomentes abgeleitet.

Aus der kinematischen Beziehung zwischen der Schlupfamplitude und der gegenphasigen Schwingung der Radscheiben kann die analytische Beschreibung des dynamischen Torsionsmomentes abgeleitet werden, die Vogel-Gerade:

- aus dem Schlupfarbeitspunkt ergibt sich $\Delta v_{Ratter} = s \cdot v$

- aus der SIN-Schwingung mit Frequenz f und $\Delta v_{Ratter}$ ergibt sich ein maximaler Torsionswinkel $\Delta \alpha_{Ratter}$ $\quad \Delta \alpha_{Ratter} = \Delta v_{Ratter} / (2 \pi r_0 f)$

$Mt = c \, \Delta \alpha_{Rad,max}$ c Torsions-Steifigkeit der Welle

- da Radsatzwellendämpfung klein gilt für das maximale Torsionsmoment

- oder der analytische Zusammenhang (Vogel-Gerade) $\quad M_t = C \, \Delta v_{Ratter} / (2 \pi r_0 f)$.

Der durch die Vogel-Gerade definiert Zusammenhang wir üblicherweise zu Abschätzung dynamischer Torsionsmomente im Auslegungsprozess verwendet.

Die vorgeschlagene analytische Methode zur Ermittlung des dynamischen Torsionsmomentes in Radsatzwellen nutzt die Hypothese, dass das dynamische Torsionsmoment aus einem Grenzzykel um den jeweiligen Schlupf- bzw. Gleitgeschwindigkeitsarbeitspunkt ableiten lässt. Die Maximalamplitude des Grenzzykels bestimmt sich aus der Energiebilanz über einen Grenzzykel.

Dementsprechend berechnet die analytische Methode für beliebige Kraftschlusscharakteristiken die Bilanz über einer Schwingung der elastischen Energie in der Radsatzwelle und der Energie die sich der Kraft und der Gleitgeschwindigkeit im Rad/Schiene-Kontakt aufbaut. Dazu sind folgende Schritte notwendig:

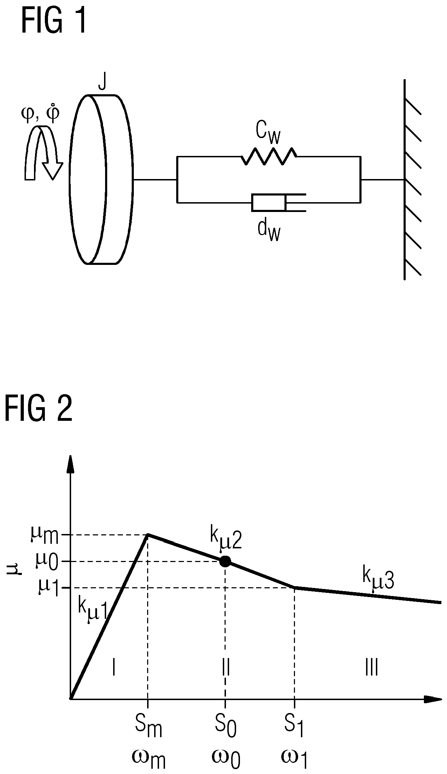

FIG 1 zeigt in einer schematischen Darstellung ein Modell für ein Schwingungssystem der Radsatzwelle, wobei J das Trägheitsmoment der Räder, $C_w$ die Torsionssteifigkeit der Welle, $d_w$ die Torsionsdämpfung der Radsatzwelle bezeichnen. Das Trägheitsmoment, die Torsionssteifigkeit und die Torsionsdämpfung sind vorgegeben bzw. werden aus mechanischen Parametern einschließlich eines Schlupfregelparameters des Schienenfahrzeuges hergeleitet. Der Schlupfregler des Schienenfahrzeuges ist in der Weise ausgebildet, dass beim Beschleunigen oder beim Abbremsen des Schienenfahrzeuges eine Regelung der Gleitgeschwindigkeit der Räder um einen vorgegebenen Schlupfarbeitspunkt erfolgt. Auf diese Weise wird der Schlupfarbeitspunkt $s_0$ festgelegt.

Der Schwingwinkel $\varphi$ und die Schwingwinkelgeschwindigkeit $\dot{\varphi}$ der Radsatzwelle lassen sich durch Sinus- und Cosinus-Funktionen darstellen:

$$\varphi = A \cdot \sin(\Omega t), \qquad \dot{\varphi} = A \cdot \Omega \cos(\Omega t), \qquad (1)$$

wobei $\Omega = 2nf$, mit f Ratterfrequenz, und A die Amplitude des Schwingwinkels $\varphi$ ist.

Die Ratterfrequenz f und damit die Kreisfrequenz $\Omega$ werden theoretisch berechnet oder experimentell ermittelt.

FIG 2 zeigt ein Diagramm, bei dem der Reibwert μ über dem Schlupf s bzw. die Raddrehgeschwindigkeit ω der Räder aufgetragen ist. Das in FIG 2 dargestellte Verhalten des Reibwertes ist für eine einfachere Darstellung in drei Bereiche I, II, III unterteilt. Abhängig von dem verwendeten Modell können auch mehrere Geraden verwendet werden, für mehr als drei Bereiche oder weniger als drei Bereiche für die Annäherung des Reibwertverhaltens festgelegt werden.

In einem ersten Bereich I zwischen 0 und $s_m$ weist der Reibwert μ eine positive erste Steigungsrate $k_\mu 1$ auf $(d\mu/ds = k_{\mu 1})$. In einem zweiten Bereich II zwischen $s_m$ und $s_1$ weist der Reibwert μ eine negative zweite Steigungsrate $k_{\mu 2}$ auf. In dem Bereich für den Schlupf größer $s_1$ weist der Reibwert eine negative dritte Steigungsrate $d\mu/ds = k_{\mu 3}$ auf.

In Formelformat lautet das Diagramm:

$$\mu(s) = \begin{cases} \mu_0 + k_{\mu 1} \cdot (s - s_m) + k_{\mu 2} \cdot (s_m - s_0), & 0 \leq s < s_m \\ \mu_0 + k_{\mu 2} \cdot (s - s_0), & s_m \leq s < s_1 \\ u_0 + k_{\mu 3} \cdot (s - s_1) + k_{\mu 2} \cdot (s_1 - s_0), & s_1 \leq s < \infty \end{cases} \qquad (2)$$

Wobei $s_0$ der Schlupfarbeitspunkt (≈ Soll-Schlupf des Schlupfreglers) und $\mu_0$ der Reibwert bei $s_0$ ist.

Mit Schlupf-Definition,

$$s = \frac{\omega_R \cdot R - v_0}{v_0}$$

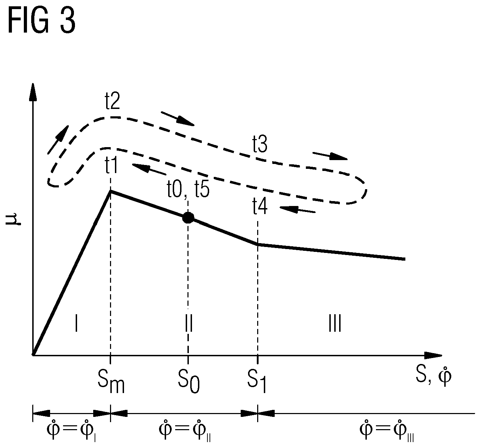

können die Raddrehgeschwindigkeiten bei allen Eckpunkten in der Abb. 3.2 umgerechnet werden:

$$\omega_m = \frac{(s_m + 1)v_0}{R}; \quad \omega_0 = \frac{(s_0 + 1)v_0}{R}; \quad \omega_1 = \frac{(s_1 + 1)v_0}{R} \qquad (3)$$

In (3) ist $v_0$ die Fahrgeschwindigkeit, R der Radius des Rades und ω die Raddrehgeschwindigkeit.

Der dynamischer Schlupf und das Drehmoment am Rad können in Abhängigkeit der (Ratter-)Schwinggeschwindigkeit beschrieben werden.

Rattert ein Radsatz, schwingt sich der (dynamische) Schlupf um den Arbeitspunkt $s_0$. Die dynamische Schlupfschwingung s kann als Funktion von der Schwinggeschwindigkeit $\dot{\varphi}$ dargestellt werden:

$$s(\dot{\varphi}) = \frac{(\omega_0 + \dot{\varphi}) \cdot R - v_0}{v_0} = s_0 + \frac{\dot{\varphi} \cdot R}{v_0} \qquad (4)$$

Betrachtet man nur die Ratterschwingung, ergibt sich das durch tangentiale Kraft Fx (=μ·Q mit der Radaufstandskraft Q) erzeugte dynamische Drehmoment am Rad MRS aus der Gleichung (2):

$$M_{RS}(s) = Q \cdot R \cdot \begin{cases} k_{\mu 1} \cdot (s - s_m) + k_{\mu 2} \cdot (s_m - s_0), & 0 \leq s < s_m \\ k_{\mu 2} \cdot (s - s_0), & s_m \leq s < s_1 \\ k_{\mu 3} \cdot (s - s_1) + k_{\mu 2} \cdot (s_1 - s_0), & s_1 \leq s < \infty \end{cases} \qquad (5)$$

Setzt man die Gleichung (4) in die Gleichung (5) ein, lässt sich das dynamische Drehmoment am Rad ebenfalls in Funktion von der Schwinggeschwindigkeit $\dot{\varphi}$ ausdrucken:

$$M_{RS}(s, \dot{\varphi}) = Q \cdot R \cdot \begin{cases} k_{\mu1} \cdot \dfrac{R \cdot \dot{\varphi}}{v_0} + (s_0 - s_m) \cdot (k_{\mu1} - k_{\mu2}), & 0 \leq s < s_m \\[3mm] k_{\mu2} \cdot \dfrac{R \cdot \dot{\varphi}}{v_0}, & s_m \leq s < s_1 \\[3mm] k_{\mu3} \cdot \dfrac{R \cdot \dot{\varphi}}{v_0} + (s_1 - s_0) \cdot (k_{\mu2} - k_{\mu3}), & s_1 \leq s < \infty \end{cases}$$

$$(6)$$

Vorzeichen und Zeitpunkte der Schwinggeschwindigkeit können in Abhängigkeit des Kraftschlussverlaufes beschrieben werden.

Durch Umformatierung der Gleichung (4) lässt sich die Schwinggeschwindigkeit $\dot{\varphi}$ in Abhängigkeit des Schlupfes s darstellen:

$$\dot{\varphi} = \frac{(s - s_0) \cdot v_0}{R}$$

$$(7)$$

Mit der Gleichung (7) kann das Vorzeichen der Schwinggeschwindigkeit in allen Schlupfbereichen des Kraftschlussverlaufes ermittelt werden.

Die Zeitpunkte, zu denen die Schlupfschwingung vom Schlupfarbeitspunkt $s_0$ ausgehend in den ersten, zweiten und dritten Bereich eingeht bzw. verlässt, werden anhand der FIG 3 dargestellt. FIG 3 zeigt in einer schematischen Darstellung den Verlauf des Reibwertes $\mu$ über den Schlupf s und eine Torsionsschwingung in einem Grenzzykel als geschlossene Kurve, die gestrichelt dargestellt ist. Zum 0ten Zeitpunkt t0 befindet sich die Radsatzwelle am Schlupfarbeitspunkt $s_0$. Ausgehend vom 0ten Zeitpunkt t0 ändert sich während der Torsionsschwingung der Schlupf in Richtung auf kleinere Werte, wobei zum ersten Zeitpunkt t1 der Schlupf den Wert $s_m$ erreicht. Anschließend wird der Schlupf zuerst weiter kleiner bis zu einem minimalen Wert, um dann wieder anzusteigen. Zu einem zweiten Zeitpunkt t2 erreicht der Schlupf wieder den Wert $s_m$. Ausgehend vom zweiten Zeitpunkt t2 vergrößert sich der Schlupf weiter, wobei bei einem dritten Zeitpunkt t3 der Schlupf den Wert $s_1$ erreicht. Im weiteren Verlauf der Schwingung vergrößert sich der Schlupf weiter bis zu einem maximalen Wert, um sich dann wieder zu verkleinern. Bei einem folgenden vierten Zeitpunkt t4 erreicht der Schlupf wieder den Wert $s_1$. Anschließend wird zu einem fünften Zeitpunkt t5 wieder der Schlupfarbeitspunkt $s_0$ erreicht.

Der Wertebereich der Winkelgeschwindigkeit 4 ist im ersten Bereich I negativ, wechselt im zweiten Bereich II von einem negativen Wert zu einem positiven Wert, und weist im dritten Bereich III einen positiven Wert auf.

| | im Bereich I | im Bereich II | im Bereich III |
|---|---|---|---|
| Wertbereich der $\dot{\varphi}$ | $\dfrac{-s_0 v_0}{R} \leq \dot{\varphi} < \omega_m - \omega_0$ | $\omega_m - \omega_0 \leq \dot{\varphi} < \omega_1 - \omega_0$ | $\omega_1 - \omega_0 \leq \dot{\varphi} < \infty$ |
| Vorzeichen der $\dot{\varphi}$ | negativ | von negativ zu positiv | positiv |

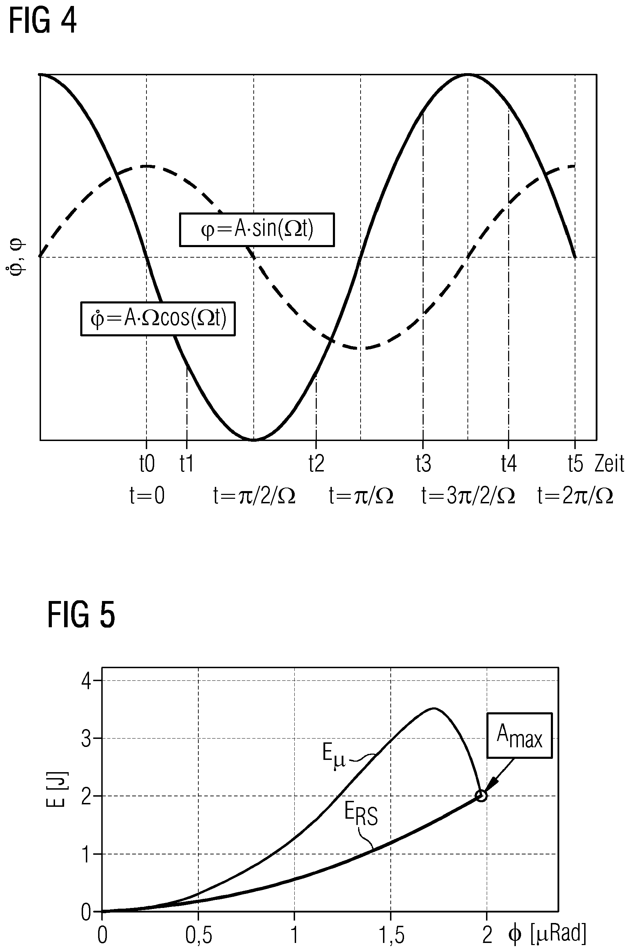

FIG 4 zeigt in einer schematischen Darstellung den Schwingwinkel $\varphi$ und die Schwingwinkelgeschwindigkeit $\dot{\varphi}$ für eine Schwingung um den Schlupfarbeitspunkt $s_0$. Der Schwingwinkel $\varphi$ kann als Sinusschwingung mit der Amplitude A und der Kreisfrequenz $\Omega$ angenommen werden. Die Schwingwinkelgeschwindigkeit $\dot{\varphi}$ kann mit der Amplitude A multipliziert mit der Kreisfrequenz multipliziert mit einem Cosinus mit der Kreisfrequenz $\Omega$ angenommen werden.

Gemäß der Annahmen für den Schwingwinkel und die Schwingwinkelgeschwindigkeit können die Zeitpunkte für den nullten Zeitpunkt t0, den ersten Zeitpunkt t1, den zweiten Zeitpunkt t2, den dritten Zeitpunkt t3, den vierten Zeitpunkt t4 und den fünften Zeitpunkt t5 gemäß der folgenden Tabelle berechnet werden

Zeitverlauf der Schwinggeschwindigkeit in einem Ratterschwingungszyklus

| Zeitpunkt | t0 | t1 | t2 | t3 | t4 | t5 |
|---|---|---|---|---|---|---|
| Zeit | $0$ | $\dfrac{1}{\Omega}\sin^{-1}(\dfrac{\omega_0-\omega_m}{A\Omega})$ | $\dfrac{\pi}{\Omega}-t1$ | $\dfrac{\pi}{\Omega}+\dfrac{1}{\Omega}\sin^{-1}(\dfrac{\omega_1-\omega_0}{A\Omega})$ | $\dfrac{3\pi}{\Omega}-t3$ | $\dfrac{2\pi}{\Omega}$ |

Die Energiebilanz für eine Torsionsschwingung (Ratterschwingung) der Radsatzwelle für einen Schwingzyklus kann gemäß dem verwendeten Modell mit den drei Bereichen für den Reibwert $\mu$ mit folgenden Formeln berechnet werden:

Energiebilanz der Ratterschwingung in einem Schwingungszyklus

In einem Schwingungszyklus kann die Schwingungsenergie der Schlupfschwingung $E_\mu$ in allen drei Bereichen des Kraftschlussverlaufes berechnet werden.

a) Im Bereich I

$$E_{\mu1} = Q \cdot R \cdot \int_{t1}^{t2} (k_{\mu1} \cdot \frac{R \cdot \dot{\varphi}}{v0} + c_1) \cdot \dot{\varphi} \cdot dt$$

$$= A \cdot \Omega \cdot c_1 \cdot Q \cdot R \cdot [\sin(\Omega t)]\big|_{t1}^{t2} + \frac{Q \cdot R^2 \cdot k_{\mu1}}{v_0} A^2 \cdot \Omega^2 (\frac{t}{2} + \frac{1}{4\Omega}\sin(2\Omega t))\big|_{t_1}^{t_2}$$

$$\texttt{mit} \quad c_1 = (s_0 - s_m) \cdot (k_{\mu1} - k_{\mu2}) \tag{8}$$

b) Im Bereich II

$$E_{\mu2} = Q \cdot R \cdot \int_{t0,t2,t4}^{t1,t3,t5} (k_{\mu2} \cdot \frac{R \cdot \dot{\varphi}}{v0}) \cdot \dot{\varphi} \cdot dt$$

$$= \frac{Q \cdot R^2 \cdot k_{\mu2}}{v_0} A^2 \cdot \Omega^2 (\frac{t}{2} + \frac{1}{4\Omega}\sin(2\Omega t))\big|_{t0,t2,t4}^{t1,t3,t5} \tag{9}$$

c) Im Bereich III

$$E_{\mu3} = Q \cdot R \cdot \int_{t3}^{t4} (k_{\mu3} \cdot \frac{R \cdot \dot{\varphi}}{v0} + d_1) \cdot \dot{\varphi} \cdot dt$$

$$= A \cdot \Omega \cdot d_1 \cdot Q \cdot R \cdot [\sin(\Omega t)]\big|_{t3}^{t4} + \frac{Q \cdot R^2 \cdot k_{\mu3}}{v_0} A^2 \cdot \Omega^2 (\frac{t}{2} + \frac{1}{4\Omega}\sin(2\Omega t))\big|_{t_3}^{t_4}$$

$$\texttt{mit} \quad d_1 = (s_1 - s_0) \cdot (k_{\mu2} - k_{\mu3}) \tag{10}$$

Daraus ergibt sich die Summenschwingungsenergie durch die Schlupfschwingung

$$E_\mu = E_{\mu1} + E_{\mu2} + E_{\mu3} \tag{11}$$

Die absorbierte Schwingungsenergie durch die resultierende Dämpfung der ist leicht zu berechnen:

$$E_{RS} = d_W \cdot A^2 \cdot \pi \cdot \Omega \tag{12}$$

Der Energieanteil $E_\mu$ und $E_{RS}$ in Abhängigkeit der Amplitude des Schwingwinkels sind schließlich mit den Gleichungen (8) bis (12) zu berechnen.

Anhand eines numerischen Verfahrens kann durch eine Gleichsetzung der Formel (11) mit der Formel (12) ein maximaler Wert für das Torsionsmoment während einer Ratterschwingung um den Schlupfarbeitspunkt $S_0$ berechnet werden. Beispielsweise kann durch eine stufenweise Vergrößerung der Amplitude A die Summenschwingungsenergie und die absorbierte Schwingungsenergie solange vergrößert werden, bis die Summenschwingungsenergie gemäß Formel (11) und die absorbierte Energie gemäß Formel (12) gleiche Werte aufweisen.

FIG 5 zeigt ein Beispiel für eine entsprechende numerische Berechnung. Dabei wurde ausgehend von einer Amplitude A des Schwingwinkels mit dem Wert 0 für die Winkelschwingung um den Schlupfarbeitspunkt während einer Ratterschwingung sowohl für die Summenschwingungsenergie $E_\mu$ als auch für die absorbierte Dämpfungsenergie $E_{RS}$ der Wert der Amplitude A des Schwingwinkels stufenweise numerisch erhöht, bis bei einer Amplitude A von 1,95 für den Schwingungswinkel die Summenschwingungsenergie und die absorbierte Dämpfungsenergie beide Energien gleich groß sind. Die Amplitude A des Schwingwinkels kann z.B. mit einem Winkel von 0,5 $\mu$rad starten und der Wert der Amplitude A kann in Schritten von 0,1 $\mu$rad erhöht werden.

Zudem kann eine Übereinstimmung der Summenschwingungsenergie und der absorbierten Schwingungsenergie erkannt werden, wenn die Summenschwingungsenergie und die absorbierte Schwingungsenergie sich um weniger als 5 %, insbesondere weniger als 2 % unterscheiden.

Somit liegt an diesem Kreuzungspunkt der Wert der maximale Schwingwinkel vor.

Abhängig vom maximalen Schwingwinkel bzw. abhängig von der maximalen Amplitude $A_{max}$ des Schwingwinkels kann gemäß folgender Formel ein maximales Torsionsmoment $M_{max}$ für die Ratterschwingung um den Schlupfarbeitspunkt berechnet werden:

$M_{max} = A_{max} \cdot c_w$, wobei mit $A_{max}$ die maximale Amplitude am Kreuzungspunkt und mit $c_w$ die Torsionssteifigkeit der Radsatzwelle bezeichnet ist.

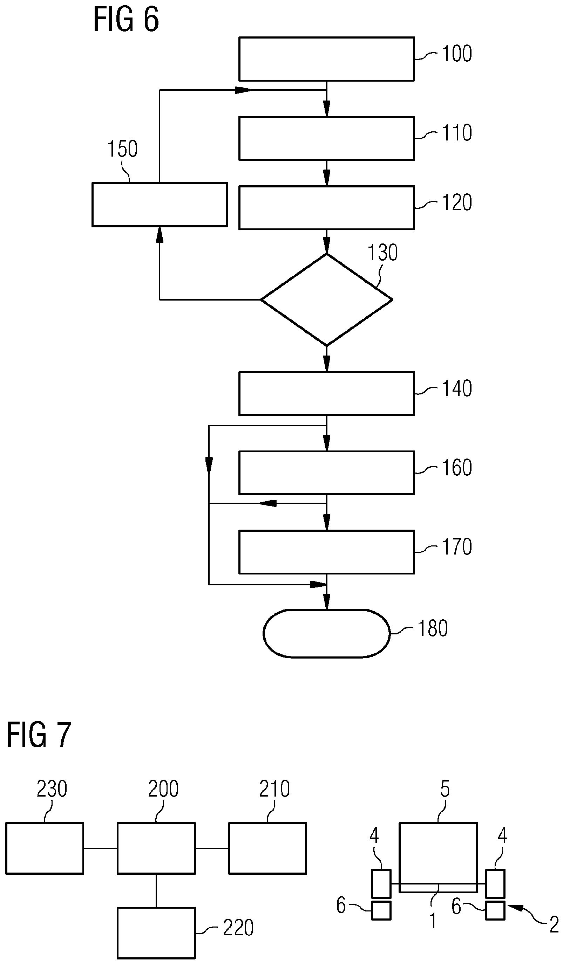

FIG 6 zeigt in einer schematischen Darstellung einen Programmablauf zur Durchführung des beschriebenen Verfahrens. Bei einem Programmstartpunkt 100 liest die Recheneinheit die Ratterfrequenz f, die Torsionssteifigkeit $c_w$, die Torsionsdämpfung $d_w$, die Werte für den Reibwert für wenigstens einen, insbesondere für drei verschiedene Bereiche in Abhängigkeit vom Schlupf s bzw. der Raddrehgeschwindigkeit $\omega$, den Radius R eines Rades der Radsatzwelle, die Fahrgeschwindigkeit v0 und einen Startwert für die Amplitude A des Schwingungswinkels aus einem Speicher ein.

Bei einem folgenden Programmpunkt 110 wird anhand der beschriebenen Formeln 8-11 für die Summe der Schlupfschwingungsenergie $E_\mu = E_{\mu 1} + E_{\mu 2} + E_{\mu 3}$ für einen Startwert einer Amplitude A des Schwingungswinkels berechnet. Anschließend wird bei Programmpunkt 120 die absorbierte Schwingungsenergie durch die resultierende Dämpfung gemäß der Formel (12) berechnet: $E_{RS} = d_W \cdot A^2 \cdot \pi \cdot \Omega$. Dabei wird ebenfalls der Startwert für die Amplitude A des Schwingwinkels verwendet.

Anschließend werden bei Programmpunkt 130 der Wert für die Summenschwingungsenergie $E_\mu$ und der Wert für die absorbierte Dämpfungsenergie $E_{RS}$ miteinander verglichen. Sind die Summenschwingungsenergie und die absorbierte Dämpfungsenergie gleich groß, so wird zu Programmpunkt 140 verzweigt.

Ergibt das Ergebnis des Vergleichs bei Programmpunkt 130, dass die Summe der Schlupfschwingungsenergie $E_\mu$ größer ist als die absorbierte Dämpfungsenergie $E_{RS}$, so wird zu Programmpunkt 150 verzweigt. Bei Programmpunkt 150 wird der Wert für die Amplitude A des Schwingwinkels um einen vorgegebenen Wert erhöht. Anschließend wird zu Programmpunkt 110 zurückverzweigt.

Die Programmschritte 110, 120 und 130 sowie 150 werden solange durchgeführt, bis die Summenschwingungsenergie und die absorbierte Dämpfungsenergie gleich groß sind und bei Programmpunkt 140 anhand der vorliegenden maximalen Amplitude $A_{max}$ des Schwingungswinkels ein maximales Rattermoment $M_{max}$ mit folgender Formel berechnet wird:

$M_{max} = A_{max} \cdot c_W$. $A_{max}$ entspricht der Amplitude des Schwingwinkels, bei der die Summenschwingungsenergie und die absorbierte Schwingungsenergie gleich groß sind.

Anschließend kann abhängig von der gewählten Ausführungsform zum Ende zu Programmpunkt 180 verzweigt werden.

In einer weiteren Ausführungsform kann nach Programmpunkt 140 ein weiterer Programmpunkt 160 optional durchgeführt werden. Bei dem Programmpunkt 160 wird anhand des bei Programmpunkt 140 berechneten maximalen Rattermomentes eine neu zu entwerfende Radsatzwelle in der Weise dimensioniert, dass die Welle und/oder die Verbindungsstruktur zwischen der Welle und dem Rad so beschaffen sind, dass die Radsatzwelle das berechnete maximale Rattermoment ohne eine Beschädigung erträgt. Anschließend kann abhängig von der gewählten Ausführungsform zum Ende zu Programmpunkt 180 verzweigt werden.

In einer weiteren Ausführung kann anstelle oder zusätzlich zu dem Programmpunkt 160 ein weiterer Programmpunkt 170 optional durchgeführt werden. Der weitere Programmpunkt 170 besteht darin, dass anhand vorgegebener Werte für eine Radsatzwelle, die beispielsweise die Dicke der Welle, das Material der Welle, die Art der Verbindungsstruktur, insbesondere wenigstens anhand eines Festigkeitsparameters der Verbindungsstruktur überprüft wird, ob eine vorgegebene Radsatzwelle das berechnete maximale Torsionsmoment erträgt, ohne beschädigt zu werden. Dazu sind entsprechende Grenzwerte festgelegt. Beispielsweise wird davon ausgegangen, dass die Radsatzwelle das berechnete maximale Torsionsmoment ohne Beschädigung erträgt, wenn die Radsatzwelle so dimensioniert ist, dass die Radsatzwelle wenigstens 120 % des maximalen Torsionsmomentes ohne Beschädigung aushält.

Die Werte für die Radsatzwelle, die für die Überprüfung erforderlich sind, werden entweder anhand einer vorgegebenen Radsatzwelle erfasst oder anhand abgespeicherter Werte überprüft. Dabei wird beispielsweise die Dicke der Welle, das Material der Welle, oder anhand eines Festigkeitsparameters eine Verbindungsstruktur zwischen der Welle und dem Rad überprüft, ob die Radsatzwelle geeignet ist, das berechnete Torsionsmoment ohne Beschädigung zu ertragen. Dazu sind entsprechende Grenzwerte festgelegt. Beispielsweise wird davon ausgegangen, dass die Radsatzwelle das berechnete maximale Torsionsmoment ohne Beschädigung erträgt, wenn die Radsatzwelle so dimensioniert ist, dass die Radsatzwelle wenigstens 120 % des maximalen Torsionsmomentes ohne Beschädigung aushält.

FIG 7 zeigt in einer schematischen Darstellung eine Vorrichtung zur Durchführung des Verfahrens nach Anspruch 6. Die Vorrichtung weist eine Recheneinheit 200 auf, die mit einem Speicher 210 verbunden ist. Zudem kann die Recheneinheit 200 auch eine Sensoreinheit 220 aufweisen, mit der die Dicke einer Welle 1 einer Radsatzwelle 2 und/oder ein Festigkeitsparameter einer Verbindungsstruktur zwischen der Welle 1 und einem Rad 4 der Radsatzwelle 2 eines Schienenfahrzeuges 5 erfasst werden kann. Die Radsatzwelle 2 rollt mit jeweils einem Rad 4 auf einer Schiene 6. Zudem kann die Recheneinheit 200 eine Ausgabeeinheit 230 aufweisen, mit der ein Ergebnis der Verfahrensschritte der Programmpunkte 140, 160 oder 170 angezeigt wird. Zudem kann die Anzeige 230 ausgebildet sein, um ein Diagramm gemäß FIG 5 darzustellen, bei dem der Verlauf der Summenschwingungsenergie $E_\mu$ und der Verlauf der absorbierten Schwingungsenergie $E_{RS}$ gemäß den Programmpunkten 110 und 120 angezeigt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Bestimmung eines Torsionsmomentes einer Radsatzwelle eines Schienenfahrzeuges beim Betrieb des Schienenfahrzeuges, wobei die Radsatzwelle eine Welle und zwei an Enden der Welle befestigte Räder aufweist, wobei die Räder zum Rollen auf zwei Schienen vorgesehen sind, wobei mithilfe eines Modells ein Torsionsmoment berechnet wird, das auf die Radsatzwelle einwirkt, wobei das Modell von einer Torsionsschwingung der Radsatzwelle bei einem vorgegebenen Schlupfarbeitspunkt ausgeht, wobei anhand einer Energie der Torsionsschwingung der Radsatzwelle um den Schlupfarbeitspunkt und anhand einer Dämpfungsenergie, die bei der Torsionsschwingung auf die Radsatzwelle einwirkt, das auf die Radsatzwelle wirkende Torsionsmoment ermittelt wird.

2. Verfahren nach Anspruch 1, wobei ein Modell für die Energie der Torsionsschwingung der Radsatzwelle um den Schlupfarbeitspunkt verwendet wird, wobei ein Modell für die Dämpfungsenergie verwendet wird, wobei beide Modelle von einer Amplitude des Schwingwinkels der Torsionsschwingung abhängen, wobei die Amplitude des Schwingwinkels ausgehend von einem Startwert für beide Modelle so lange erhöht wird, bis beide Modelle einen gleich großen Wert für die Energie an einem Kreuzungspunkt aufweisen, und wobei anhand der Amplitude der Torsionsschwingung am Kreuzungspunkt und abhängig von einer vorgegebenen Torsionssteifigkeit der Welle ein auf die Radsatzwelle einwirkendes Torsionsmoment berechnet wird.

3. Verfahren nach einem der vorhergehenden Ansprüche, wobei die Bestimmung des Torsionsmomentes für eine positive und/ oder negative Beschleunigung des Schienenfahrzeuges durchgeführt wird, wobei als Betriebszustand der vorgegebene Schlupfarbeitspunkt für die positive und/oder die negative Beschleunigung verwendet wird.

4. Verfahren nach einem der vorhergehenden Ansprüche, wobei das Modell für die Energie der Torsionsschwingung in wenigstens drei Bereiche mit unterschiedlichem Verhalten des Reibwertes zwischen dem Rad und der Schiene unterteilt wird, wobei die Reibwerte insbesondere vom Schlupf der Räder abhängen.

5. Verfahren nach Anspruch 4, wobei für jeden der wenigstens drei Bereiche die Energie der Torsionsschwingung während einer Torsionsschwingung um den Schlupfarbeitspunkt berechnet wird, und wobei die drei Energieanteile zu einer Energie der Torsionsschwingung summiert werden.

6. Verfahren nach einem der vorhergehenden Ansprüche, wobei die Energie der Torsionsschwingung abhängig von einem vorgegebenen Fahrgeschwindigkeitsbereich des Schienenfahrzeuges berechnet wird, und wobei insbesondere eine maximale Energie der Torsionsschwingung für die Ermittlung eines maximalen Torsionsdrehmomentes der Radsatzwelle für einen Kreuzungspunkt verwendet wird.

7. Verfahren nach einem der vorhergehenden Ansprüche, wobei die Energie der Torsionsschwingung abhängig von einem vorgegebenen Winkelgeschwindigkeitsbereich berechnet wird, und wobei insbesondere eine maximale Energie für die Ermittlung eines maximalen Torsionsdrehmomentes der Radsatzwelle verwendet wird.

8. Verfahren nach einem der vorhergehenden Ansprüche, wobei ein Schwingungswinkel einer Torsion der Radsatzwelle mithilfe einer Sinusschwingung ermittelt wird.

9. Verfahren nach einem der vorhergehenden Ansprüche, wobei ein Schlupf während einer Torsionsschwingung abhängig von einer Winkelgeschwindigkeit der Torsionsschwingung berücksichtigt wird.

10. Verfahren nach einem der vorhergehenden Ansprüche, wobei jedes Rad über eine mechanischen Verbindungsstruktur mit der Welle verbunden ist, wobei die Welle und/oder die Verbindungsstruktur so dimensioniert werden, dass die Radsatzwelle das berechnete Torsionsmoment ohne Beschädigung erträgt.

11. Verfahren nach einem der Ansprüche 1 bis 9, wobei jedes Rad mit einer mechanischen Verbindungsstruktur mit der Welle verbunden ist, wobei für eine Prüfung der Radsatzwelle eine Dicke der Welle und/oder ein Festigkeitsparameter der Verbindungsstruktur erfasst wird, und wobei anhand der Dicke der Welle und/oder anhand des Festigkeitsparameters überprüft wird, ob die Radsatzwelle geeignet ist, das berechnete Torsionsmoment ohne Beschädigung zu ertragen.

## Claims

1. Method for determining a torsional moment of a wheelset shaft of a rail vehicle during the operation of the rail vehicle, wherein the wheelset shaft has a shaft and two wheels secured to ends of the shaft, wherein the wheels are provided for rolling on two rails, wherein a model is used to calculate a torsional moment which acts on the wheelset shaft, wherein the model is based on a torsional vibration of the wheelset shaft at a specified slip action point, wherein the torsional moment acting on the wheelset shaft is ascertained on the basis of an energy of the torsional vibration of the wheelset shaft at the slip action point and on the basis of a damping energy which acts on the wheelset shaft during the torsional vibration.

2. Method according to claim 1, wherein a model is used for the energy of the torsional vibration of the wheelset shaft at the slip action point, wherein a model is used for the damping energy, wherein both models depend on an amplitude of the vibration angle of the torsional vibration, wherein starting from a starting value for both models the amplitude of the vibration angle is increased until both models exhibit an equal value for the energy at an intersection point, and wherein a torsional moment acting on the wheelset shaft is calculated on the basis of the amplitude of the torsional vibration at the intersection point and as a function of a specified torsional rigidity of the shaft.

3. Method according to one of the preceding claims, wherein the determining of the torsional moment is performed for a positive and/or negative acceleration of the rail vehicle, wherein the specified slip action point for the positive and/or negative acceleration is used as an operating state.

4. Method according to one of the preceding claims, wherein the model for the energy of the torsional vibration is subdivided into at least three ranges having different characteristics of the friction coefficient between the wheel and the rail, wherein the friction coefficients depend on the slip of the wheels in particular.

5. Method according to claim 4, wherein the energy of the torsional vibration during a torsional vibration at the slip action point is calculated for each of the at least three ranges, and wherein the three energy components are added together to give an energy of the torsional vibration.

6. Method according to one of the preceding claims, wherein the energy of the torsional vibration is calculated as a function of a specified travelling speed range of the rail vehicle, and wherein in particular a maximum energy of the torsional vibration is used for the purpose of ascertaining a maximum torsional moment of rotation of the wheelset shaft for an intersection point.

7. Method according to one of the preceding claims, wherein the energy of the torsional vibration is calculated as a function of a specified angular velocity range, and wherein in particular a maximum energy is used for the purpose of ascertaining a maximum torsional moment of rotation of the wheelset shaft.

8. Method according to one of the preceding claims, wherein a vibration angle of a torsion of the wheelset shaft is ascertained using a sine wave.

9. Method according to one of the preceding claims, wherein a slip during a torsional vibration is taken into consideration as a function of an angular velocity of the torsional vibration.

10. Method according to one of the preceding claims, wherein each wheel is connected to the shaft via a mechanical connecting structure, wherein the shaft and/or the connecting structure are so dimensioned that the wheelset shaft bears the calculated torsional moment without damage.

11. Method according to one of claims 1 to 9, wherein each wheel is connected to the shaft via a mechanical connecting structure, wherein in order to check the wheelset shaft a thickness of the shaft and/or a strength parameter of the connecting structure is captured, and wherein with reference to the thickness of the shaft and/or the strength parameter a check is performed in order to determine whether the wheelset shaft is suitable for bearing the calculated torsional moment without damage.


**Revendications**

1. Procédé pour la détermination d'un couple de torsion d'un arbre d'essieu d'un véhicule ferroviaire lors du fonctionnement du véhicule ferroviaire, dans lequel l'arbre d'essieu comprend un arbre et deux roues fixées sur des extrémités de l'arbre, dans lequel les roues sont prévues pour rouler sur deux rails, dans lequel un couple de torsion qui agit sur l'arbre d'essieu est calculé à l'aide d'un modèle, dans lequel le modèle est fondé sur une oscillation de torsion de l'arbre d'essieu lors d'un point de fonctionnement de glissement prédéfini, dans lequel le couple de torsion agissant sur l'arbre d'essieu est déterminé au moyen d'une énergie de l'oscillation de torsion de l'arbre d'essieu autour du point de fonctionnement de glissement et au moyen d'une énergie d'amortissement qui lors de l'oscillation de torsion agit sur l'arbre d'essieu.

2. Procédé selon la revendication 1, dans lequel est utilisé un modèle pour l'énergie de l'oscillation de torsion de l'arbre d'essieu autour du point de fonctionnement de glissement, dans lequel est utilisé un modèle pour l'énergie d'amortissement, dans lequel les deux modèles dépendent d'une amplitude de l'angle d'oscillation de l'oscillation de torsion, dans lequel l'amplitude de l'angle d'oscillation est augmentée à partir d'une valeur de départ pour les deux modèles jusqu'à ce que les deux modèles possèdent une valeur de même grandeur pour l'énergie au niveau d'un point de croisement, et dans lequel au moyen de l'amplitude de l'oscillation de torsion au niveau du point de croisement et en fonction d'une rigidité de torsion prédéfinie de l'arbre est calculé un couple de torsion agissant sur l'arbre d'essieu.

3. Procédé selon l'une des revendications précédentes, dans lequel est menée la détermination du couple de torsion pour une accélération positive et/ou négative du véhicule ferroviaire, dans lequel le point de fonctionnement de glissement prédéfini pour l'accélération positive et/ou l'accélération négative est utilisé en tant qu'état de fonctionnement.

4. Procédé selon l'une des revendications précédentes, dans lequel le modèle pour l'énergie de l'oscillation de torsion est divisé en au moins trois zones avec un comportement différent de la valeur de frottement entre la roue et le rail, dans lequel les valeurs de frottement dépendent en particulier du glissement des roues.

5. Procédé selon la revendication 4, dans lequel pour chacune des au moins trois zones l'énergie de l'oscillation de torsion est calculée pendant une oscillation de torsion autour du point de fonctionnement de glissement, et dans lequel sont additionnées les trois fractions d'énergie par rapport à une énergie de l'oscillation de torsion.

6. Procédé selon l'une des revendications précédentes, dans lequel l'énergie de l'oscillation de torsion est calculée en fonction d'une zone de vitesse de déplacement prédéfinie du véhicule ferroviaire, et dans lequel en particulier une énergie maximale de l'oscillation de torsion est utilisée pour la détermination d'un couple rotatif de torsion maximal de l'arbre d'essieu pour un point de croisement.

7. Procédé selon l'une des revendications précédentes, dans lequel l'énergie de l'oscillation de torsion est calculée en fonction d'une zone de vitesse angulaire prédéfinie, et dans lequel en particulier une énergie maximale est utilisée pour la détermination d'un couple rotatif de torsion maximal de l'arbre d'essieu.

**8.** Procédé selon l'une des revendications précédentes, dans lequel un angle d'oscillation d'une torsion de l'arbre d'essieu est déterminé à l'aide d'une oscillation sinusoïdale.

**9.** Procédé selon l'une des revendications précédentes, dans lequel un glissement pendant une oscillation de torsion est pris en considération en fonction d'une vitesse angulaire de l'oscillation de torsion.

**10.** Procédé selon l'une des revendications précédentes, dans lequel chaque roue est reliée à l'arbre par l'intermédiaire d'une structure de liaison mécanique, dans lequel l'arbre et/ou la structure de liaison sont dimensionnés de sorte que l'arbre d'essieu supporte le couple de torsion calculé sans dégradation.

**11.** Procédé selon l'une des revendications 1 à 9, dans lequel chaque roue est reliée à l'arbre par une structure de liaison mécanique, dans lequel pour un essai de l'arbre d'essieu une épaisseur de l'arbre et/ou un paramètre de résistance de la structure de liaison sont enregistrés, et dans lequel, au moyen de l'épaisseur de l'arbre et/ou au moyen du paramètre de résistance, il est vérifié si l'arbre d'essieu est approprié pour supporter le couple de torsion calculé sans dégradation.

# FIG 1

# FIG 2

# FIG 3

## FIG 4

$\varphi = A \cdot \sin(\Omega t)$

$\dot{\varphi} = A \cdot \Omega \cos(\Omega t)$

$\dot{\varphi}, \varphi$

t0   t1          t2          t3      t4      t5  Zeit

$t=0$      $t=\pi/2/\Omega$    $t=\pi/\Omega$    $t=3\pi/2/\Omega$   $t=2\pi/\Omega$

## FIG 5

$E_\mu$

$A_{max}$

$E_{RS}$

$E\ [J]$

$\phi\ [\mu Rad]$

## FIG 6

## FIG 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2913241 A1
- EP 2913202 A1
- DE 102012206606 B3

**In der Beschreibung aufgeführte Nicht-Patentliteratur**

- Auf der Suche nach dem maximalen Radsatzwellen-Torsionsmoment, in ZEVrail. **WEBER, FRANZ-JOSEF.** 42. Tagung Moderne Schienenfahrzeuge. Technischen Universität Graz, 07. September 2014, vol. 138, 176-180
- Auf der Suche nach dem maximalen Radsatzwellen-Torsionsmoment, Präsentation anlässlich. **WEBER, FRANZ-JOSEF.** 42. Tagung Moderne Schienenfahrzeuge. Technischen Universität Graz, 07. September 2014
- **FRANZ-JOSEF et al.** *Answers for infrastructure and cities...auf der Suche nach dem maximalen Radsatzwellen Torsionsmoment,* 10. September 2014, http://www.schienenfahrzeugtagung.at/download/pdf2014/DiV07-Weber.pdf